# EUROPÄISCHE PATENTANMELDUNG

(11) **EP 0 642 881 A1**
(43) Veröffentlichungstag der Anmeldung: **15.03.1995**
(21) Anmeldenummer: 94112976.9
(22) Anmeldetag: 19.08.1994
(51) Int. Cl.: B23Q 5/56

(54) **Spielfreier Rundtischantrieb einer Werkzeugmaschine**

(30) Priorität: 13.09.1993 DE 4331042
(71) Anmelder: LIEBHERR-VERZAHNTECHNIK GmbH, D-87437 Kempten (DE)
(72) Erfinder: Mundt, Alois, Dr., D-87439 Kempten (DE)
(74) Vertreter: Klunker . Schmitt-Nilson . Hirsch

(57) **Zusammenfassung**

Die Erfindung betrifft einen spielfreien Rundtischantrieb einer Werkzeugmaschine, die dadurch gekennzeichnet ist, daß zwischen dem Ritzel des Antriebsmotors und dem auf der Tischspindel angeordneten Antriebsrad mindestens zwei parallele Wellen mit jeweils zwei Stirnrädern geschaltet sind, von denen jeweils ein Rad in das Motorritzel und ein Rad mit hiervon abweichendem Schrägungswinkel in das Tischantriebsrad eingreift, wobei die korrespondierenden Räder beider Zwischenwellen diesselbe Zähnezahl haben und mindestens eine Zwischenwelle axial verschieblich so gelagert ist, daß die Verzahnungen der Zwischenwellen in verschiedenen Richtungen zum Anliegen gelangen.

## Beschreibung

Die Erfindung betrifft einen spielfreien Rundtischantrieb einer Werkzeugmaschine.

Ein häufiges Funktionselement bei Maschinen ist ein gegenüber dem Wirkelement drehbarer Tisch zur Aufnahme der zu bearbeitenden Gegenstände. In vielen Fällen, insbesondere bei Maschinen zur Herstellung bzw. Bearbeitung von Zahnrädern, wird gefordert, daß dieser Tisch so gelagert und angetrieben ist, daß die Einwirkung äußerer oder aus dem Arbeitsprozeß herrührender Kräfte zu keiner bzw. nur einer unwesentlichen Veränderung seiner Position führt. Für die zu eliminierenden Freiheitsgrade läßt sich dies durch eine hinreichend steife und spielfreie Ausführung der Lagerung des Tisches erreichen. Letzteres kann durch geeignet gewählte Passungen der Funktionselemente, spielfreie Vorspannung der Lager in sich selbst bzw. gegeneinander oder auch durch aktive Regelung von Stellelementen der Lagerung realisiert werden.

Bezüglich der verbliebenen Freiheitsgrade, bei einem Rundtisch also der Rotation um dessen Hochachse, ist es erforderlich, den Antrieb so zu gestalten, daß es auf der Abtriebsseite zu keinen unerwünschten Positionsveränderungen des Tisches aufgrund der genannten Krafteinwirkungen kommen kann. Bei den in der Regel verwendeten Stirnrad- oder Schneckengetrieben ist es prinzipbedingt nicht möglich, die Antriebselemente in sich spielfrei zu gestalten, ohne deren Funktionsbrauchbarkeit zu beeinträchtigen. Es ist vielmehr erforderlich, durch Hinzufügung geeigneter Einrichtungen das vorhandene Antriebsspiel zu unterdrücken.

Die bekannten Lösungen für spielfreie Stirnrad- und Schneckengetriebe lassen sich in folgende Gruppen einteilen:
1. Einleitung eines Kompensationsmomentes
   Hier wird von dem auf die Tischspindel wirkenden Antriebsmoment ein vom Antriebsmoment verschiedenes, zweites Drehmoment überlagert, wobei die Resultierende beider Momente am Zahneingriff der letzten getriebenen Welle größer als die maximal zu erwartende Störkomponente ist. Auf diese Weise wird die Verzahnung des eigentlichen Rundtischantriebs am Abheben gehindert und sichergestellt, daß dieselbe ständig in derselben Richtung Flankenkontakt hat.
   Hierbei sind zwei Untergruppen zu unterscheiden:
   1.1 Mit dem Antriebs- oder Abtriebsrad reibschlüssig verspanntes Bremsrad abweichender Zähnezahl (Friktionsrad):
      Unbefriedigend sind hier neben der stark begrenzten Relativkraft und der hierdurch bedingten Limitierung der zulässigen äußeren Kräfte auch der aus den Reibungsverlusten resultierende, geringe Wirkungsgrad des Getriebes und das damit verbundene Vorhandensein einer Wärmequelle im Getriebe, die thermisch induzierte Geometrieänderungen hervorrufen kann.
   1.2 Auf die Tischspindel parallel wirkender, weiterer Antrieb:
      Bekannte, in vielfältiger Form gebräuchliche Ausführungen sind sowohl separate Antriebe mit eigener Kraftquelle, teilweise mit Rückführung der Bremsenergie auf den eigentlichen Rundtischantrieb, als auch Einrichtungen, welche ihre Antriebsenergie schlupfbehaftet von der Kraftquelle des Rundtischantriebs ableiten. Der Zusatzantrieb kann je nach Anwendungsfall bremsend oder treibend wirksam sein oder auch in seiner Richtung umschaltbar. Nachteilig sind wiederum der meist nur geringe Wirkungsgrad, bedingt durch Wandlungs-, Übertragungs- und Schlupfverluste, der komplizierte Aufbau solcher Vorspannungen und ihre damit zusammenhängenden hohen Kosten.
2. Verspannung des Getriebezugs
   Hier erfolgt eine Kraftverzweigung auf mehrere parallele Antriebsstränge im Rundtischantrieb. Durch eine elastisch nachgiebige Verlagerung mindestens eines Antriebselementes bezüglich des entsprechenden Elements im parallelen Antriebsstrang wird eine mechanische Verspannung der Antriebsstränge zueinander bewirkt, so daß die Verzahnungen der Antriebsstränge ständig an jeweils entgegengesetzten Flanken anliegen.
   Hierbei sind zwei Untergruppen zu unterscheiden:
   2.1 Elastische Verdrehung zweier Antriebselemente desselben Getriebezuges zueinander, zum Beispiel durch Ausbildung einer Zwischenwelle als vorgespannten Torsionsstab:
      Solche Lösungen wurden bereits vereinzelt ausgeführt und haben sich auch bewährt. Ihr Anwendungsbereich ist durch die Tatsache begrenzt, daß sich das elastische Element im unmittelbaren Kraftfluß befindet und entsprechend kräftig dimensioniert werden muß.
   2.2 Elastische Verschiebung mindestens eines schrägverzahnten Übertragungselementes (Stirnrad oder Schnecke) in Richtung seiner Drehachse, wobei das axial verschiebbare Übertragungselement drehsteif mit einer gemeinsamen, fest gelagerten Antriebswelle in Wirkverbindung steht:
   2.2.1 Beim sogenannten Schieberitzel kämmt mit einem breiten, schrägverzahnten Antriebsrad parallel zum Antriebsritzel ein weiteres, auf derselben Antriebswelle sitzendes, auf dieser axial verschiebliches Ritzel mit identischem Schrägungswinkel, wobei durch Einwirkung einer axialen Vorspannkraft auf dieses Ritzel ein Anliegen seiner Verzahnung entgegen der Treibrichtung bewirkt wird. Diese weitverbreitete Lösung erfordert einen großen axialen und radialen Bauraum für die beiden hintereinander angeordneten Räder und die verschiebbare Ritzelnabe mit Drehmomentübertragung. Ferner muß die Verzahnung des angetriebenen Rades unwirtschaftlich breit ausgeführt werden.
   2.2.2 Bei einem Doppelschneckengetriebe wird mindestens eine von zwei auf die Antriebswelle wirkenden Schnecken elastisch in axialer Richtung verschoben, bis diese mit der getriebenen Flanke ihrer Verzahnung anliegt. Diese ebenfalls allgemein bekannte Bauart erfordert einen hohen Aufwand bei Herstellung und Unterhaltung, hat einen hohen Platzbedarf, und die erreichbare Drehzahl findet ihre Grenze in der beschränkten Gleitgeschwindigkeit der Schnecken.

Die Erfindung realisiert in bisher zumindest für Verzahnmaschinen noch nicht bekannter Weise einen spielfreien Rundtischantrieb durch ein mehrstufiges Getriebe mit folgendem Aufbau (vgl. Zeichnung).

Mit dem Ritzel der Antriebswelle (Achse 1) wälzen die Räder 2A und 2B mindestens zweier ähnlich aufgebauter Zwischenstufenwellen (Achse 2A und Achse 2B). Die abtriebsseitigen Ritzel 2A und 2B der Zwischenwellen kämmen mit dem Rad 3 der Abtriebswelle (Achse 3). Räder und Ritzel jeder Zwischenwelle sind starr miteinander verbunden, jedoch zueinander justierbar. Die Verzahnungen von Antriebsritzel 1 und Abtriebsrad 3 und demzufolge auch die Verzahnungen der Zwischenwelle sind mit unterschiedlichen Schrägungswinkeln ausgeführt. Durch axiales Verschieben mindestens einer Zwischenwelle können somit die Flanken der Verzahnungen der Zwischenwellen in entgegengesetzten Richtungen zur Anlage gebracht und der Getriebezug spielfrei gemacht werden.

In der bevorzugten Ausführungsform der Erfindung kämmen die Räder der Zwischenwellen alle mit denselben An- und Abtriebsrädern, und zwar wiederum bevorzugt in derselben Eingriffsebene, so daß der Bauaufwand minimiert wird.

In einer weiteren, hiervon unabhängigen Ausführungsform der Erfindung werden die Schrägungswinkel der Räder auf der An- und Abtriebsseite im Betrag so unterschiedlich gewählt, daß die Differenz der Axialkraftkomponenten der Zahneingriffe ausreicht, eine Verschiebung der Zwischenwelle und damit die Spielfreiheit des Getriebes zu bewirken.

In weiterer Ausgestaltung der Erfindung kann das Verschieben der Zwischenwelle bewirkt werden, indem von außen eine zusätzliche axiale Vorspannkraft auf die verschieblichen Zwischenwellen einwirkt und die Zahnflanken am Abheben hindert. Dies ist besonders vorteilhaft, wenn das Drehmoment an der An- oder Abtriebsseite gezielt oder durch den Bearbeitungsprozeß bedingt starken Schwankungen unterliegt. Die axiale Vorspannkraft kann auf mechanischem Wege, vorzugsweise mittels einer Feder, aber auch durch fluidische Einrichtungen, vorzugsweise eines Hydraulik- oder Pneumatikzylinders, sowie mittels eines Elektromagneten oder dergleichen aufgebracht werden.

Die fluidische oder elektrische Krafteinleitung gestattet in weiterer Ausgestaltung der Erfindung, die Vorspannkraft auch während des Laufs der Maschine gezielt zu beeinflussen und so an unterschiedliche Betriebszustände anzupassen.

In einer weiteren Ausgestaltung der Erfindung ist es möglich, auch Getriebe mit mehr als zwei Stufen zu realisieren, indem die Zwischenwellen in mehrstufige Rädersätze aufgelöst werden, von denen nur einer in der beschriebenen Weise axial verschieblich zu sein braucht.

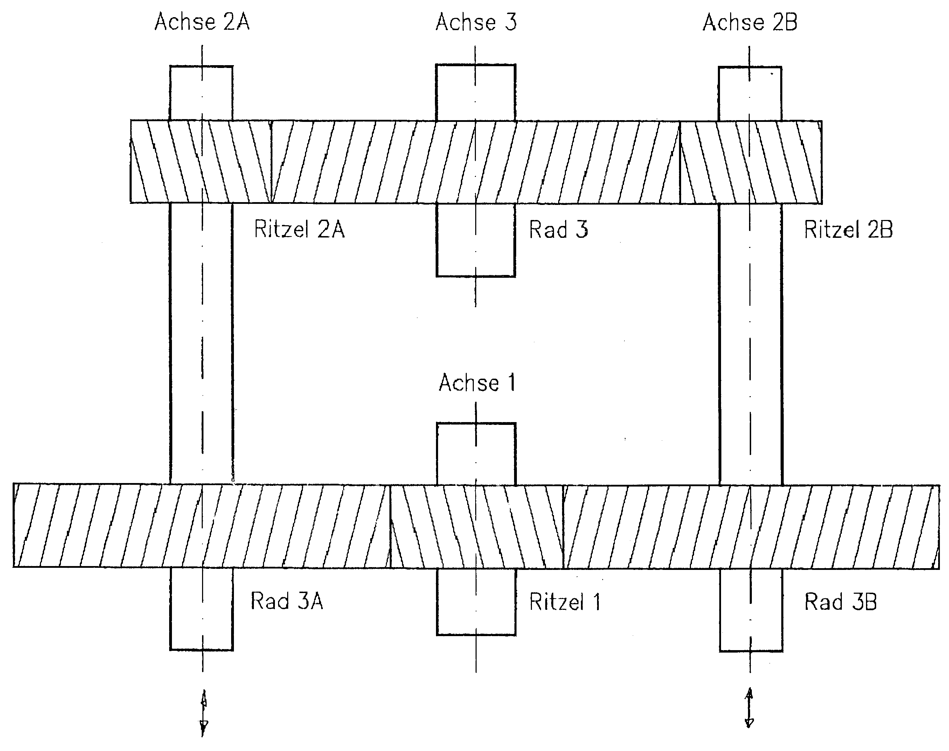

## Patentansprüche

1. Spielfreier Rundtischantrieb einer Werkzeugmaschine,
**dadurch gekennzeichnet**,
daß zwischen dem Ritzel des Antriebsmotors und dem auf der Tischspindel angeordneten Antriebsrad mindestens zwei parallele Wellen mit jeweils zwei Stirnrädern geschaltet sind, von denen jeweils ein Rad in das Motorritzel und ein Rad mit hiervon abweichendem Schrägungswinkel in das Tischantriebsrad eingreift, wobei die korrespondierenden Räder beider Zwischenwellen dieselbe Zähnezahl haben und mindestens eine Zwischenwelle axial verschieblich so gelagert ist, daß die Verzahnungen der Zwischenwellen in verschiedenen Richtungen zum Anliegen gelangen.

2. Antrieb nach Anspruch 1,
**dadurch gekennzeichnet**,
daß die axiale Vorspannkraft durch die Differenz der aus dem Schrägungswinkel herrührenden Axialkraftkomponenten der Zahneingriffe aufgebaut wird.

3. Antrieb nach Anspruch 1,
**dadurch gekennzeichnet**,
daß die verschiebbare Zwischenwelle mittels einer Vorspannfeder oder anderen mechanischen Einrichtung axial belastet wird.

4. Antrieb nach Anspruch 1,
**dadurch gekennzeichnet**,
daß die verschiebbare Zwischenwelle mittels eines Hydraulik- oder Pneumatikzylinders oder einer anderen fluidischen Einrichtung axial belastet wird.

5. Antrieb nach Anspruch 1,
**dadurch gekennzeichnet**,
daß die verschiebbare Zwischenwelle mittels eines Elektromagneten oder eines anderen elektrischen Aktors axial belastet wird.

6. Antrieb nach einem der Ansprüche 3 bis 5,
**dadurch gekennzeichnet**,
daß die auf die verschiebbare Zwischenwelle wirkende Axialkraft manuell oder gesteuert verändert werden kann.

7. Antrieb nach einem der vorhergehenden Ansprüche,
**dadurch gekennzeichnet**,
daß die korrespondierenden Räder der Zwischenwellen dieselbe Eingriffsebene haben.

8. Antrieb nach einem der vorhergehenden Ansprüche,
**dadurch gekennzeichnet**,
daß anstelle der Zwischenwellen mehrstufige Rädersätze angeordnet werden, von denen mindestens einer axial verschieblich gelagert ist.
